# EUROPÄISCHE PATENTANMELDUNG

(11) **EP 4 428 389 A1**
(43) Veröffentlichungstag der Anmeldung: **11.09.2024**
(21) Anmeldenummer: 24158342.6
(22) Anmeldetag: 19.02.2024
(51) Int. Cl.: F16F 13/14

(54) **HYDROLAGER MIT LECKAGEKANAL**

(30) Priorität: 07.03.2023 DE 102023105647
(71) Anmelder: VORWERK AUTOTEC GmbH & Co. KG, 42287 Wuppertal (DE)
(72) Erfinder: Rahner, Marcel René, 42489 Wülfrath (DE); Röder, Frank, 45549 Sprockhövel (DE); Schmitz, Cornelius, 40591 Düsseldorf (DE)
(74) Vertreter: Lippert Stachow Patentanwälte Rechtsanwälte

(57) **Zusammenfassung**

Die Erfindung betrifft ein hydraulisch dämpfendes Lager 1, mit einem Lagerkern 2, einer Außenhülse 3, und einem zwischen Lagerkern 2 und Außenhülse 3 angeordneten Elastomerkörper 4, 4', 4", wobei Lagerkern 2, Außenhülse 3 und Elastomerkörper 4, 4', 4" zumindest zwei sich gegenüberliegende, mit Dämpfungsflüssigkeit gefüllte, einander zugeordnete Flüssigkeitskammern begrenzen, wobei die einander zugeordneten Flüssigkeitskammern durch zumindest einen Dämpfungskanal verbunden sind. Das Lager 1 weist einen Leckagekanal auf, der die Kammern Fluidverbindet zur Bereitstellung eines Leckagenfluidflusses zwischen den Flüssigkeitskammern, wobei eine Länge des Leckagekanals kleiner als 1/3, insbesondere kleiner als 1/5 einer Länge des Dämpfungskanals ist. (Fig. 1)

## Beschreibung

Die Erfindung betrifft ein hydraulisch dämpfendes Lager mit einem Lagerkern, einer Außenhülse und einem zwischen Lagerkern und Außenhülse angeordneten Elastomerkörper, wobei Lagerkern, Außenhülse und Elastomerkörper zumindest zwei mit Dämpfungsflüssigkeit gefüllte, einander zugeordnete Flüssigkeitskammern begrenzen, und wobei die einander zugeordneten Flüssigkeitskammern durch zumindest einen Dämpfungskanal verbunden sind.

Derartige Lager werden beispielsweise als Buchsenlager zur Lagerung der Lenker von Motoren, Aufbauten und Aggregaten bei Kraftfahrzeugen verwendet. Um insbesondere in vorgegebenen Anregungsfrequenz- bzw. Amplitudenbereichen eine verbesserte Dämpfung bereitzustellen, als sie mit einer reinen Elastomerdämpfung zu erreichen ist, reagiert das gattungsbildende Lager auf entsprechende Anregungen und frequenzabhängig mit hydraulischer Dämpfungsarbeit. Hierzu können die zumindest beiden durch einen Dämpfungskanal verbunden Flüssigkeitskammern abschnittsweise durch Blähfederabschnitte und Tragfederabschnitte begrenzt sein. Eine Beanspruchung des Lagers führt dazu, dass Dämpfungsflüssigkeit über den Dämpfungskanal von einer Kammer in die andere Kammer ausweicht und/oder ein zugeordneter Blähfederabschnitt aufgeweitet wird. Das Verhalten eines solchen Lagers ist stark frequenzabhängig, wobei bei niedrigen Anregungsfrequenzen die Dämpfung im Wesentlichen durch den Elastomerwerkstoff bestimmt wird während bei steigenden Anregungsfrequenzen der Strömungswiderstand und damit die Dämpfung zunimmt. Bei weiter steigenden Anregungsfrequenzen ist der Strömungswiderstand so groß, dass ein Fluidfluss verhindert ist, und allein die jeweilige Blähfeder aufgeweitet wird. In der Regel nimmt die Dämpfung dann mit weiter steigender Anregungsfrequenz wieder ab. Ein derartiges Lager wird auf dem Gebiet auch als Hydrolager bezeichnet.

Charakteristische Größen derartiger Hydrolager sind die statische Steifigkeit, die im Wesentlichen durch Elastomerabschnitte und gegebenenfalls Einlageabschnitte der Tragfeder des Elastomerkörpers bestimmt wird, die dynamische Steifigkeit, welche bei niedrigen Anregungsfrequenzen wiederum im Wesentlichen durch die Tragfeder bestimmt wird und die bei höheren Anregungsfrequenzen durch die frequenzabhängigen Strömungseigenschaften der in beiden Flüssigkeitskammern und zwischen diesen über den Dämpfungskanal strömenden Dämpfungsflüssigkeit bestimmt wird sowie der Verlustwinkel, welcher die Dämpfungseigenschaften des Lagers angibt und stark frequenzabhängig ist. Ein Verlustwinkel von Null ergibt sich bei einem rein elastisch arbeitendem Lager und ein Verlustwinkel von 90° bei einem Lager, das rein viskos arbeitet, so dass die gesamte eingebrachte Anregungsenergie durch innere Reibung in Wärme umgewandelt wird. Je nach spezifischer Gestaltung des Lagers kann erreicht werden, dass die Dämpfung optimiert für vorgegebene Betriebsfrequenzen des Lagers eingestellt ist, so dass solche Lager zur Entkopplung vorgegebenen Betriebsschwingungen und damit zur Bereitstellung eines hohen Komforts ausgebildet werden können. Derartige herkömmlichen Lager weisen die grundsätzliche Eigenschaft auf, dass der Verlustwinkel ausgehend von niedrigen Frequenzen zu hohen Frequenzen bis zum Erreichen eines Maximums zunimmt, wobei diese Zunahme des Verlustwinkels zwar eine hohe Entkopplung bereitstellt, jedoch aufgrund der Belastung des Lagers zu einer reduzierten Lebensdauer führen kann. Eine Lösung für diese Problematik kann durch eine Reduzierung der Dämpfungsflüssigkeitsmenge erreicht werden, hierdurch erhöht sich jedoch die Gefahr einer Geräuschentwicklung beim Betrieb des Lagers wie Kluckern oder Quietschen.

Insofern liegt der vorliegenden Erfindung die Aufgabe zugrunde, ein herkömmliches hydraulisch dämpfendes Lager so weiter zu bilden, dass ein verminderter Verlustwinkel bei hohen Frequenzen ermöglicht und gleichzeitig eine unerwünschte Geräuschentwicklung beim Betrieb des Lagers vermieden wird.

Diese Aufgabe löst die vorliegende Erfindung in einer ersten Variante durch ein Hydrauliklager mit den Merkmalen von Anspruch 1. Das erfindungsgemäße hydraulisch dämpfende Lager weist einen Lagerkern, eine Außenhülse und einen zwischen Lagerkern und Außenhülse angeordneten Elastomerkörper auf, wobei Lagerkern, Außenhülse und Elastomerkörper zumindest zwei mit Dämpfungsflüssigkeit gefüllte, einander zugeordnete Flüssigkeitskammern begrenzen, und wobei die einander zugeordneten Flüssigkeitskammern durch zumindest einen Dämpfungskanal verbunden sind. Das erfindungsgemäße Lager zeichnet sich durch das Vorsehen eines Leckagekanals aus, der die Flüssigkeitskammern Fluid-verbindet zur Bereitstellung eines Leckagenfluidflusses zwischen den Flüssigkeitskammern, wobei eine Länge des Leckagekanals kleiner als 1/3, insbesondere kleiner als 1/5 einer Länge des Dämpfungskanals ist.

Der Erfinder hat überraschenderweise herausgefunden, dass sich die dynamische Steifigkeit bei hohen Frequenzen eines herkömmlichen Hydrolagers auf einfache Weise dadurch erniedrigen lässt, dass neben dem eigentlichen Dämpfungskanal zwischen den zumindest beiden einander zugeordneten Flüssigkeitskammern ein Leckagekanal zwischen den Kammern angeordnet werden sollte, welcher wie der zumindest eine Dämpfungskanal beim bestimmungsgemäßen Gebrauch des Lagers permanent offen ist zur Bereitstellung eines Leckagenfluidflusses zwischen den Flüssigkeitskammern. Dabei ist die Länge des Leckagekanals wesentlich geringer als der Dämpfungskanal gestaltet, insbesondere kleiner als 1/3, vorzugsweise kleiner als 1/5, besonders vorzugsweise kleiner als 1/7 oder gar 1/10 der Länge des Dämpfungskanals betragen kann. Sowohl Dämpfungskanal als auch Leckagekanal können im Wesentlichen unabhängig von Flüssigkeitsdruckverhältnissen in den zugeordneten Flüssigkeitskammern bei einer bestimmungsgemäßen Verwendung des Lagers offen, d. h. die zumindest beiden einander zugeordneten Flüssigkeitskammern können permanent Fluidverbindend angeordnet sein.

Die Angabe "Länge des Dämpfungskanals" bzw. "Länge des Leckagekanals" kann als Flussstrecke des Fluids bzw. der Flüssigkeit bei dessen Strömung von einem Austrittsbereich aus einer der beiden einander zugeordneten Flüssigkeitskammern in einen Eintrittsbereich der anderen der beiden Flüssigkeitskammern verstanden werden.

Weitere vorteilsbehaftete Merkmale und Weiterbildungen der Erfindung sind in der nachfolgenden allgemeinen Beschreibung, den Figuren, der Figurenbeschreibung sowie den Unteransprüchen angegeben.

Vorzugsweise kann vorgesehen sein, dass der Leckagekanal in einem Wandabschnitt angeordnet ist, der die beiden einander zugeordneten Flüssigkeitskammern trennt, wobei beide Kammern an diesen Wandabschnitt angrenzen können. Insofern kann der Leckagekanal insbesondere in Dickenrichtung dieses Wandabschnittes verlaufen, so dass die Länge des Leckagekanals beispielsweise je nach Ausführungsform < 4 cm, insbesondere < 2 cm, oder auch < 1 cm betragen kann. Je nach Ausführungsform kann der Leckagekanal in einem zwischen den beiden Kammern angeordneten Blähwandabschnitt des Elastomerkörpers oder auch in einem Federtragabschnitt, d.h. im Bereich von Elastomermaterial des Elastomerkörpers ausgebildet sein. Darüber hinaus kann auch vorgesehen sein, dass der Leckagekanal im Bereich eines die Kammern trennenden Wandabschnitts aus einem zum Elastomer unelastischen Material, wie einem Kunststoffmaterial einer Einlage des Elastomerkörpers angeordnet ist.

Die obige Aufgabe wird ferner in einer zweiten Variante durch ein hydraulisch dämpfendes Lager gelöst mit einem Lagerkern, einer Außenhülse und einem zwischen Lagerkern und Außenhülse angeordneten Elastomerkörper, wobei Lagerkern, Außenhülse und Elastomerkörper zumindest zwei sich, mit Dämpfungsflüssigkeit gefüllte, einander zugeordnete Flüssigkeitskammern begrenzen, und wobei die einander zugeordneten Flüssigkeitskammern durch zumindest einen Dämpfungskanal verbunden sind. Darüber hinaus ist in dieser Variante eine Bypassvorrichtung angeordnet mit einer Überdruckventileinrichtung zum Herstellen einer Bypassfluidverbindung zwischen den Kammern durch Öffnen der Überdruckventileinrichtung, insbesondere bei erhöhten Betriebsbelastungen auf das Lager in Bezug auf Anregungsamplitude und/oder Anregungsfrequent bzw. erhöhten Fluiddruckunterschieden zwischen den einander zugeordneten Fluid- bzw. Flüssigkeitskammern. In dieser zweiten Ausführungsform eines Hydrauliklagers ist das Lager dadurch ausgezeichnet, dass die Bypassvorrichtung einen offenen Leckagekanal aufweist, der die Kammern insbesondere bei einer bestimmungsgemäßen Verwendung Fluid-verbindet, d. h. permanent offen sein kann, wobei beim Überschreiten einer vorgegebenen Belastung, insbesondere eines vorgegebenen Flüssigkeitsinnendrucks in einer der einander zugeordneten Kammern ein Leckagenfluidfluss von der einen Kammern in die andere Kammer zur Unterstützung bzw. Steuerung des Öffnens der Überdruckventileinrichtung bereitgestellt ist. Diese Unterstützung bzw. Steuerung des Öffnens der Überdruckventileinrichtung kann insbesondere durch ein Ändern der Druckverhältnisse im Bereich der Überdruckventileinrichtung der Bypassvorrichtung in einer oder beiden Flüssigkeitskammern erzielt werden.

Zweckmäßigerweise kann vorgesehen sein, dass die Überdruckventileinrichtung in Abhängigkeit einer Anregungsamplitude auf das Lager arbeitet, wobei das Antwortverhalten, d. h. das Öffnen bzw. Schließen der Überdruckventileinrichtung darüber frequenzabhängig eingestellt sein kann. Grundsätzlich kann die Überdruckventileinrichtung so ausgebildet sein, dass diese ohne äußere Steuerung, d. h. direktwirkend arbeitet, beispielsweise durch das Erzeugen einer elastischen Rückstellkraft beim Öffnen der Ventileinrichtung, die beim Wegfall der äußeren Anregung zum Schließen der Ventileinrichtung führt, insbesondere durch elastische Umformung und Entspannung vorgegebener Elastomerbereiche oder -abschnitte des Elastomerkörpers.

In der zweiten Variante eines erfindungsgemäß ausgebildeten Hydrolagers kann der Leckagekanal eine Kanallänge aufweisen, die insbesondere kleiner als 1/3, vorzugsweise kleiner als 1/5, besonders vorzugsweise kleiner als 1/7 oder gar 1/10 der Länge des Dämpfungskanals betragen kann. Die Angabe "Länge des Dämpfungskanals" bzw. "Länge des Leckagekanals" kann als Flussstrecke des Fluids bzw. der Flüssigkeit bei dessen Strömung von einem Austrittsbereich aus einer der beiden einander zugeordneten Flüssigkeitskammern in einen Eintrittsbereich der anderen der beiden Flüssigkeitskammern verstanden werden.

Die nachfolgend beschriebenen Erläuterungen und erfindungsgemäßen Weiterbildungen der Erfindung können sich sowohl auf die erste als auch auf die zweite der obenstehend beschriebenen Varianten eines erfindungsgemäß gestalteten hydraulisch dämpfenden Lagers beziehen bzw. darauf angewendet werden.

Die Angabe "Elastomerkörper" als Bauteil des erfindungsgemäßen Lagers ist breit zu verstehen und kann Abschnitte umfassen, die vollständig aus einem Elastomermaterial ausgebildet sind und darüber hinaus auch Abschnitte, die beispielsweise zum Elastomer unelastisches Material wie Einlagenabschnitte aus Kunststoff und/oder Metall aufweisen. Beispielsweise kann der Elastomerkörper ein Fensterrohr umfassen, das im Wesentlichen eine Längserstreckung aufweist, die etwa der Längserstreckung des Lagers selbst entsprechen kann. Es kann vorgesehen sein, dass Elastomerabschnitte zur Bildung von Blähwandabschnitten und/oder Tragfederabschnitte des Lagers zwischen Lagerkern und einem solchen Fensterrohr angeordnet sind, insbesondere durch Anvulkanisierung.

Die Angabe "Fluid" in Alleinstellung oder in zusammengesetzten Begriffen kann eine Flüssigkeit oder ein Gas, insbesondere allgemein eine Flüssigkeit meinen.

Es hat sich herausgestellt, dass eine weitere Verminderung des Verlustwinkels bei hohen Anregungsfrequenzen bzw. eine Verminderung des Maximums des Verlustwinkels des erfindungsgemäßen Lagers dadurch erreicht werden kann, dass das Verhältnis des Durchmessers des Leckagekanals zum Durchmesser des Dämpfungskanals, insbesondere bezogen auf die jeweiligen Durchmesser in der Längsmitte des jeweiligen Kanals oder eines durchschnittlichen Durchmessers über die jeweilige Kanallänge, kleiner als 1/2, insbesondere kleiner als 1/3 oder gar kleiner als 1/4 beträgt.

Zur Unterstützung bzw. Steuerung des Öffnens der Bypassfluidverbindung zwischen den Kammern bzw. der Überdruckventileinrichtung hat sich die Erzeugung eines Leckagenfluidflusses als vorteilhaft herausgestellt, beispielsweise derart, dass dieser in der anderen der einander zugeordneten Kammer im Bereich der Überdruckventileinrichtung eine Druckerniedrigung erzeugt, wodurch der Öffnungsprozess in der Überdrückventileinrichtung erleichtert werden kann. Eine solche Druckerniedrigung kann insbesondere auf der Grundlage eines Injektorprinzips erzeugbar sein.

Zweckmäßigerweise kann vorgesehen sein, dass die Überdruckventileinrichtung der Bypassvorrichtung zumindest zwei zum Öffnen elastisch verformbare Ventilelemente umfasst, wobei eine der beiden Ventilelemente einer ersten hydraulischen Arbeitsrichtung des Lagers und die andere der beiden Ventilelemente einer zweiten, insbesondere zur ersten entgegengesetzt verlaufenden Arbeitsrichtung des Lagers zugeordnet sein kann. Vorzugsweise kann dabei vorgesehen sein, dass beide Ventilelemente unabhängig voneinander auslenkbar ausgebildet sind. Diese können ferner gegenläufig ausgebildet sein zum jeweiligen Öffnen beim Arbeiten des Lagers in die zugeordnete Arbeitsrichtung.

Zweckmäßigerweise kann vorgesehen sein, dass zumindest eines der Ventilelemente, insbesondere beide Ventilelemente jeweils eine elastisch auslenkbare Ventilklappe umfassen, mit einem an dem Elastomerkörper angeformten Basisabschnitt und einem sich von diesem erstreckenden, zumindest abschnittsweise freitragenden Dichtlippenabschnitt, der in einer Schließstellung der Ventilklappe, insbesondere elastisch vorgespannt, an einer Innenfläche der Außenhülse des Lagers anliegt. Die jeweilige Ventilklappe kann einen lappenartigen Körperabschnitt aufweisen mit einer der Außenhülse zugewandten Begrenzungsfläche und einer der Außenhülse abgewandten Begrenzungsfläche. Vorzugsweise kann dabei vorgesehen sein, dass zur Bereitstellung einer Offenstellung der jeweiligen Ventilklappe diese radial nach innen elastisch auslenkbar angeordnet und ausgebildet ist zum Abheben des Dichtlippenabschnitts von der Innenfläche der Außenhülse und damit zum Herstellen einer Bypassfluidverbindung zwischen den beiden einander zugeordneten Flüssigkeitskammern.

In einer Ausführungsform kann zumindest eine, insbesondere beide Ventilklappen vollständig aus einem Elastomermaterial gebildet sein. Eine jeweilige Ventilklappe kann in der Schließstellung schräg zur Außenhülse des Lagers, vorzugsweise in einem spitzen Winkel zwischen 20° und 70°, insbesondere etwa zwischen 35° und 55°, z. B. 45° orientiert sein. Dabei kann die Ausbildung und Anordnung der jeweiligen Ventilklappe derart sein, dass eine Auslenkung der jeweiligen Ventilklappe durch eine Druckbeaufschlagung ausgehend von einer der beiden Fluidkammern auf eine Fläche der jeweiligen Ventilklappe zur Auslenkung derselben radial nach innen und damit zur Bereitstellung einer Bypassfluidverbindung zwischen den beiden Kammern erzeugbar ist. In einer zweckmäßigen Ausführungsform kann vorgesehen sein, dass eine jeweilige Ventilklappe einen Winkel von etwa 45° zur Tangentialrichtung in Bezug auf die Längsachse des Lagers aufweist, wobei der Dichtlippenabschnitt etwa parallel zur Längsachse des Lagers verlaufen kann, insbesondere bei der Realisierung eines Hydrolagers mit radialer Arbeitsrichtung. Eine jeweilige Ventilklappe kann eine radial außenliegende, der Außenhülse des Lagers zugewandte Begrenzungsfläche aufweisen, welche eine der beiden zugeordneten Flüssigkeitskammern abschließt, und eine radial innenliegende, der Außenhülse des Lagers abgewandte Begrenzungsfläche aufweisen, welche die andere der beiden Flüssigkeitskammern abschließt, d. h. begrenzt. Druckdifferenzen an beiden Grenzflächen der Ventilklappe können eine elastische Verformung der jeweiligen Ventilklappe verursachen, wodurch diese eine Bypassfluidverbindung zwischen den beiden einander zugeordneten Fluidkammern bereitstellt.

Zur Vermeidung von durch eine jeweilige Ventilklappe verursachte Betriebsgeräuschen kann zweckmäßigerweise vorgesehen sein, dass ein jeweiliger freitragender Dichtlippenabschnitt einer Ventilklappe eine Mehrzahl von einander beabstandeten Flüssigkeitsaufnahmetaschen aufweist.

Um eine besonders effiziente Unterstützung bzw. Steuerung der Öffnung des jeweiligen Ventilelements bzw. der Ventilklappe bereitzustellen, kann vorgesehen sein, dass die zumindest zwei zum Öffnen elastisch verformbaren Ventilelemente benachbart zueinander ausgebildet sind, wobei der Leckagekanal zwischen beiden Ventilelementen, d. h. angrenzend zu beiden Ventilelementen angeordnet sein kann.

Zweckmäßigerweise kann vorgesehen sein, dass der Leckagekanal so angeordnet und ausgebildet ist, dass dieser einen Leckagenfluidfluss bereitstellt von einem Bereich der Unterseite des einen Ventilelements bzw. Ventilklappe in Richtung zur Unterseite des anderen Ventilelements bzw. der anderen Ventilklappe. Insbesondere kann vorgesehen sein, dass der Leckagekanal durch dessen Ausrichtung ausgebildet und angeordnet ist, einen Leckagenfluidfluss in einem Winkel von etwa 45° relativ zu einer Parallelen einer Längsachse des Lagers bereitzustellen. Auch kann vorgesehen sein, den Leckagekanal in einem Winkel von etwa 45° zu einander in Reihe ausgerichteten Dichtlippen der beiden Ventilelementen bzw. Ventilklappen anzuordnen.

Vorteilhaft kann zumindest eine der, insbesondere die zumindest beiden Ventilklappen vollständig aus einem Elastomerabschnitt des Elastomerkörpers ausgebildet sein. Es ist jedoch auch möglich, dass eine Ventilklappe eine Einlage, beispielsweise aus einem Kunststoffmaterial, das starr im Vergleich zum Elastomermaterial ausgebildet sein kann, umfasst. Der Basisabschnitt einer Ventilklappe bzw. der zumindest beiden Ventilklappen kann an einem Elastomerabschnitt des Elastomerkörpers ausgebildet sein bzw. von diesem ausgehend sich erstrecken.

Wie dargestellt können die zumindest beiden Ventilklappen bezüglich ihrer Dichtlippenabschnitte je nach Ausführungsform zueinander fluchtend ausgerichtet und insbesondere parallel oder insbesondere senkrecht zur Längsachse des erfindungsgemäßen Hydrauliklagers verlaufen.

Ein besagter Elastomerabschnitt, an welchem ein solcher Basisabschnitt einer oder zumindest zweier Ventilklappen ausgebildet ist bzw. sind kann beispielsweise ein elastomerer Tragfederabschnitt des Elastomerkörpers oder ein elastomerer Blähmembranabschnitt des Elastomerkörpers sein.

Die Angabe "Tragfederabschnitt" kann dabei einen Elastomerabschnitt des Elastomerkörpers bezeichnen, welcher die statische Tragfähigkeit des Lagers im Wesentlichen festlegt und die Angabe "Blähmembran- oder Blähfederabschnitt des Elastomerkörpers" einen Abschnitt, welcher einen durch eine Betriebsbelastung elastisch verformbaren Elastomerabschnitt zur Bereitstellung eines veränderbaren Volumens zumindest einer der beiden einander zugeordneten Fluidkammern bezeichnen kann.

Es kann vorgesehen sein, dass der Leckagekanal eine radiale Ausnehmung an einem Elastomerabschnitt des Elastomerkörpers umfasst, insbesondere in der Art einer radialen Nut, wobei die Ausnehmung radial außen durch eine Innenmantelfläche der Außenhülse abgeschlossen sein kann zur Gestaltung des Leckagekanals.

Zweckmäßigerweise kann das erfindungsgemäße hydraulisch dämpfende Lager ein Fensterrohr als Einlage des Elastomerkörpers aufweisen, das zumindest abschnittsweise, insbesondere vollständig von Elastomermaterial eingebettet sein kann. Dabei können radial diametral gegenüberliegende und am Lagerkern und am Fensterohr anhaftende elastomere Tragfederabschnitte angeordnet sein. Ferner können längsstirnseitig an Ringabschnitten des Fensterrohrs radial nach innen zum Lagerkern verlaufende und axial beabstandete elastomere Blähmembran- bzw. Blähferderabschnitte vorgesehen sein zur stirnseitigen Abgrenzung der beiden einander zugeordneten Fluidkammern des erfindungsgemäßen Lagers. Diese Flüssigkeitskammern können radial gegenüberliegend angeordnet und radial durch die Außenhülse abgeschlossen sein.

Grundsätzlich kann das erfindungsgemäße Hydrauliklager zur Bereitstellung einer axialen Arbeitsrichtung und/oder radialen Arbeitsrichtung ausgebildet sein. Bei einer radialen Arbeitsrichtung ist das erfindungsgemäße jeweilige Lager beim Auftreten einer radialen Belastung zur Bewirkung einer Dämpfungsarbeit in radialer Richtung ausgebildet. In entsprechender Weise gilt dies für ein erfindungsgemäßes Hydrolager, dass zur Bewirkung von axialer Dämpfungsarbeit beim Auftreten einer axialen Belastung auf das Lager ausgebildet ist.

Zur Bereitstellung zumindest eines Dämpfungskanals zwischen den zumindest beiden einander zugeordneten Fluidkammern kann zweckmäßigerweise vorgesehen sein, eine ein- oder mehrteilige, insbesondere eine zweiteilige Kanalschale zwischen der Außenhülse und dem Elastomerkörper anzuordnen, wobei die Kanalschale an einer der Außenhülse zugewandten Außenseite eine Kanalausnehmung aufweisen kann, die radial durch die Außenhülse abgeschlossen wird.

Diese Ausnehmung und damit der Dämpfungskanal kann je nach Ausführungsform sich umfänglich und/oder axial erstrecken bzw. in seiner Erstreckung entsprechende Richtungskomponenten aufweisen, um einen Verbindungskanal zwischen den zumindest beiden zugeordneten Flüssigkeitskammern bereitzustellen. Bei einer Ausführungsform, bei welcher die Kanalschale zwei umfänglich aufeinanderfolgende Halbschalen umfassen kann, können diese Halbschalen in Einbaulage jeweils zueinander ausgerichtete und ineinander übergehende Ausnehmungsabschnitte zur Bereitstellung des Dämpfungskanals aufweisen.

Um beim Auftreten erhöhter Betriebskräfte in Richtung einer vorgegebenen Arbeitsrichtung eine Zerstörung des erfindungsgemäßen Lagers zu verhindern, kann zweckmäßigerweise vorgesehen sein, dass der Lagerkern an seinen die beiden Flüssigkeitskammern einschließenden Umfangsabschnitten jeweils einen radial nach außen sich erstreckenden Anschlagspuffer aufweist, der mit einer zugeordneten Innenmantelfläche der Kanalschale zur Beschränkung der relativen radialen Bewegung des Lagerkerns zur Außenhülse zusammenwirken kann. Insbesondere kann vorgesehen sein, dass für jede der einander zugeordneten Flüssigkeitskammern, die in der beschriebenen Ausführungsform beispielsweise diametral gegenüberliegend angeordnet sein können, jeweils ein solcher Anschlagspuffer vorgesehen ist. Dieser jeweilige Anschlagspuffer kann beispielsweise als Elastomerpuffer ausgebildet sein und an den Lagerkern anvulkanisiert sein. Dagegen ist es auch möglich, die Anschlagspuffer integral mit dem Lagerkern herzustellen, oder die Anschlagspuffer, beispielsweise durch Spritzgießen an den Lagerkern anzuspritzen. Bei dieser Ausführungsform kann dann vorgesehen sein, dass der Anschlagspuffer mit Elastomermaterial beschichtet bzw. von diesem umschlossen ist.

Zur Gestaltung des Leckagekanals kann vorgesehen sein, eine diesbezügliche Ausnehmung an der Kanalschale vorzusehen, die wie bei der Gestaltung des Dämpfungskanals durch zugeordnete Innenabschnitte der Außenhülse radial abgeschlossen sein kann, so dass in dieser Ausführungsform sowohl der Dämpfungskanal als auch der Leckagekanal durch die Kanalschale in Zusammenwirkung mit der Außenhülse des Lagers bereitgestellt sein kann. Zweckmäßigerweise kann dabei vorgesehen sein, dass die Ausnehmung zur Bereitstellung des Leckagekanals bei solchen Ausführungsformen, bei welchen die Kanalschale durch zwei Halbschalen bereitgestellt ist, allein in einer der Halbschalen verläuft. Dabei kann eine der beiden Halbschalen einen sich insbesondere umfänglich erstreckenden Finger oder Vorsprung aufweisen, auf welchem an der der Außenhülse zugewandten Mantelfläche die besagte Ausnehmung ausgebildet sein kann.

Je nach Ausführungsform kann der die Ausnehmung des Fingers aufweisende Abschnitt der Halbschale zwischen den aus Elastomermaterial gestalteten Ventilelementen angeordnet sein.

Bei solchen Ausführungsformen, bei welchen die Überdruckventileinrichtung zwei Ventilelemente bzw. Ventilklappen aufweist kann vorgesehen sein, dass sich der besagte Finger der Kanalhalbschale zwischen den beiden Ventilklappen erstreckt, so dass auch in dieser Ausführungsform der Leckagenfluidfluss zwischen den Ventilelementen bzw. -klappen erzeugbar ist, insbesondere zur Unterstützung bzw. Steuerung des Öffnens einer jeweiligen Ventilklappe beim Auftreten erhöhter Belastungen auf das Lager, insbesondere in Bezug auf die Amplitude und/oder die Frequenz der Anregung.

In einer zweckmäßigen Ausführungsform kann vorgesehen sein, dass der Leckagekanal als Durchführung in einem Abschnitt des Elastomerkörpers ausgebildet ist, insbesondere einen Elastomerwandabschnitt des Elastomerkörpers. Dabei kann sich die Durchführung in Dickenrichtung des Elastomerwandabschnittes erstrecken, wobei dieser Wandabschnitt beide einander zugeordnete Flüssigkeitskammern gegeneinander abgrenzen kann. In einer weiteren Ausführungsform kann auch vorgesehen sein, dass der Leckageabschnitt in einem Wandabschnitt des Elastomerkörpers ausgebildet ist, der eine Einlage umfasst, wobei auch dieser Wandabschnitt die beiden einander zugeordneten Flüssigkeitskammern gegeneinander abgrenzen kann.

In einer Ausführungsform, bei welcher zumindest ein Leckagekanal sich in Dickenrichtung einer Elastomerwandung des Elastomerkörpers erstreckt, kann vorgesehen sein, dass die Überdruckventileinrichtung der Bypassvorrichtung einen in einer Längsrichtung ausgebildeten und zwei Längsenden umfassenden, in einer Schließstellung spaltfreien Trennschlitz in einem Elastomerabschnitt des Elastomerkörpers aufweist, der sich in Dickenrichtung eines Elastomerwandabschnitts des Elastomerkörpers, d.h. durch den Wandabschnitt hindurch erstrecken kann, wobei an zumindest einem der beiden Längsenden des in Schließstellung spaltfreien Trennschlitzes dieser in einen jeweiligen Leckagekanal übergeht, der sich wie der Trennschlitz über die gesamte Wanddicke des Elastomerwandabschnitts erstreckt und damit einen Fluidfluss zwischen den einander zugeordneten Fluidkammern bereitstellt, insbesondere unabhängig von der jeweiligen bestimmungsgemäßen Betriebssituationen. Dabei kann vorgesehen sein, dass der in Schließstellung spaltfreie Trennschlitz beim Auftreten einer vorgegebenen Belastung des Lagers in eine vorgegebene Richtung in eine Offenstellung überführbar ist, d. h. in einen offenen, spaltbehafteten Trennschlitz, so dass über dessen Längserstreckung die beiden einander zugeordneten und an dem Elastomerwandabschnitt angrenzenden Fluidkammern ein Bypassfluidstrom zwischen den Kammern erzeugbar ist zusätzlich zu dem Leckagekanalfluidstrom.

Der Übergang der Überdruckventileinrichtung von der Schließstellung in eine Offenstellung kann durch den Leckagefluidfluss unterstützt bzw. gesteuert werden, insbesondere durch eine Änderung der Druckverhältnisse in beiden einander zugeordneten Fluidkammern im Bereich der Überdruckventileinrichtung.

Die Schließstellung des spaltfreien Trennschlitzes kann beispielsweise so eingerichtet sein, dass der Elastomerwandabschnitt des Elastomerkörpers, im Bereich dessen der Trennschlitz ausgebildet ist, vorgespannt ist, derart, dass einander zugeordnete, den Trennschlitz festlegende Trennflächen des Elastomerwandabschnitts aneinandergepresst sind. Diese Schließstellung des Trennschlitzes kann beim Auftreten erhöhter Betriebskräfte, die betriebsgemäß, d.h. innerhalb vorgegebener Sollgrenzen liegen können, zu einer verbundene Volumenverkleinerung in einer der einander zugeordneten Flüssigkeitskammern führen, sodass der Trennschlitz in eine Offenstellung übergeht zur Bereitstellung eines Bypassfluidflusses zwischen den einander zugeordneten Kammern.

Es hat sich insbesondere herausgestellt, dass die Kombination einer Bypassvorrichtung umfassend eine Überdruckventileinrichtung mit einem Leckagekanal bei einem erfindungsgemäßen Hydrolager, insbesondere einem hydraulisch dämpfenden elastomeren Buchenlager, zu einer starken Absenkung der dynamischen Steifigkeit des erfindungsgemäßen Hydrauliklagers bei erhöhten Anregungsfrequenzen führen kann, was eine wesentliche Standzeiterhöhung des erfindungsgemäßen Lagers zur Folge haben kann.

Die beschriebene erfindungsgemäße Gestaltung des Hydrauliklagers kann sowohl zur Realisierung axial wirkender, hydraulisch dämpfender Lager, bei welchen die Arbeitsrichtung des Lagers radial verläuft als auch bei der Gestaltung axial wirkender Hydrauliklager Anwendung finden, bei welcher die Arbeitsrichtung axial verläuft. Darüber hinaus kann die Erfindung auch auf mehrdirektional wirkende hydraulisch dämpfende Lager angewendet werden, z.B. Lager, umfassend zumindest zwei radial gegenüberliegende Fluidkammern, die durch einen diesen zugeordneten Dämpfungskanal fluidverbunden sind, sowie zwei axial gegenüberliegende Fluidkammern, die durch einen diesen zugeordneten Dämpfungskanal fluidverbunden sind.

Die Erfindung wird im Folgenden durch das Beschreiben einer Ausführungsform nebst Abwandlungen auf der Grundlage der beiliegenden Figuren erläutert, wobei
- Figur 1:: in eine perspektivischen Explosionsdarstellung die Bauteile eines erfindungsgemäß gestalteten Hydrolagers;
- Figur 2:: das Hydrolager der Figur 1 in einer ersten perspektivischen Ansicht mit entfernter Außenhülse und entfernter Dämpfungskanalschale;
- Figur 3:: in einer zweiten perspektivischen Ansicht das Hydrolager der Figur 1 mit entfernter Außenschale und entfernter Dämpfungskanalschale;
- Figur 4:: eine Detailansicht der Figur 3 zur Erläuterung der Bypassvorrichtung;
- Figur 5:: eine Darstellung entsprechend der Figur 3 mit aufgesetzter Dämpfungskanalschale;
- Figur 6:: eine Darstellung entsprechend der Figur 2 mit aufgesetzter Dämpfungskanalschale;
- Figur 7:: einen Längsschnitt durch das erfindungsgemäße Lager der Figur 1;
- Figur 8:: ein erfindungsgemäß gestaltetes Hydrolager in einer zweiten Ausführungsform mit entfernter Außenhülse;
- Figur 9:: einen Lagerkern mit daran gebrachtem Elastomerkörper zur Gestaltung einer dritten Ausführungsform eines erfindungsgemäßen Hydrolagers, und
- Figur 10:: einen Lagerkern mit daran gebrachtem Elastomerkörper zur Gestaltung einer vierten Ausführungsform eines erfindungsgemäßen Hydrolagers zeigt.

Obwohl die Erfindung darauf nicht beschränkt ist, werden im Folgenden hydraulisch dämpfende Gummi-Metall-Lager bzw. Buchsenlager beschrieben, die im Wesentlichen zur Erzeugung radialer Dämpfungsarbeit ausgelegt sind. Der Fachmann versteht, dass die Erfindung auch zur Gestaltung von im Wesentlichen axial wirkenden, oder auch mehrdirektional wirkende, hydraulisch dämpfenden Gummi-Metall-Lagern, insbesondere Hydrobuchsen anwendbar ist.

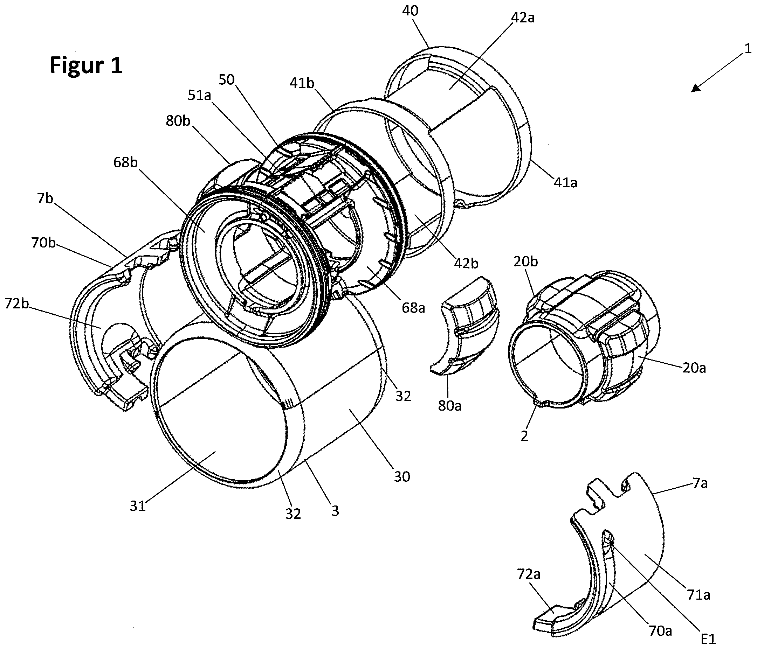

Figur 1 zeigt in einer Explosionsdarstellung eines zur Aufnahme und Dämpfung von radial wirkenden Betriebskräften ausgelegten Hydrolagers. Das erfindungsgemäße Hydrolager 1 weist einen Lagerkern 2 auf, der beispielsweise ein Metallmaterial oder ein Kunststoffmaterial umfasst bzw. aus einem solchen hergestellt sein kann. In der beschriebenen Ausführungsform kann der Lagerkern zwei etwa diametral gegenüberliegende Anspritzungen 20a, b aufweisen, auf welche untenstehend bezüglich der Gestaltung von diametral gegenüberliegenden Anschlagspuffer eingegangen wird. In einer anderen Ausführungsform kann auch vorgesehen sein, dass der Lagerkern 2 integral mit diametral an der Außenfläche angeordneten Anschlagselementen ausgebildet ist.

In der beschriebenen Ausführungsform ist der Lagerkern 2 hülsenförmig ausgebildet, beispielsweise zur Aufnahme eines Befestigungsbolzens. Erfindungsgemäß kann der Lagerkern 2 auch anders ausgebildet sein, beispielsweise mit einem integral hergestellten Befestigungsbolzen. Das hier beschriebene erfindungsgemäße Hydrolager 1 ist radial außen durch eine Außenhülse 3 abgeschlossen, die insbesondere aus einem Metallmaterial wie Stahl oder Alu ausgebildet sein kann. Diese Außenhülse 3 kann im Wesentlichen über die gesamte Längserstreckung des Lagerkerns 2 verlaufen. Radial zwischen dem Lagerkern 2 und der Außenhülse 3 ist ein Elastomerkörper 4 angeordnet, der in der beschriebenen Ausführungsform ein Fensterrohr 40 als Einlageelement und das eigentliche Elastomerteil 50 umfassen kann. Die Außenhülse weist an ihren Stirnenden eine jeweilige Umbördelung 32 auf, über welche Außenhülse und Elastomerkörper axial zueinander fixiert sind. Das Fensterrohr 40 kann zwei in Längsrichtung des Lagers beabstandete Ringabschnitte 41a, 41b umfassen, die mittels zweier diametral gegenüberliegenden Längsabschnitten 42a, 42b verbunden sind. Das Fensterrohr 40 kann je nach Ausführungsform beispielsweise aus einem Metallmaterial oder einem Kunststoffmaterial hergestellt sein.

Wie dargestellt, ist das erfindungsgemäße Hydrolager 1 zur Bewirkung von Dämpfungsarbeit in radialer Richtung ausgebildet. Hierzu kann das Elastomerteil 50 diametral gegenüberliegende und im Bereich der Längsabschnitte 42a, 42b des Fensterrohrs 40 angeordnete Tragfederabschnitte 51a, 51b aufweisen. Bei der Gestaltung des das Fensterrohr 40 und das Elastomerteil 50 umfassenden Elastomerkörpers 4 kann beispielsweise der zum Fensterrohr 40 axial ausgerichtete und radial innen angeordnete Lagerkern 2 zur Gestaltung des Elastomerteils 50 mit einem Elastomer umspritzt sein, derart, dass das Elastomerteil 50 anhaftend, beispielsweise durch Anvulkanisieren am Lagerkern 2 und am Fensterrohr 40 befestigt ist, wobei letzteres durch das Elastomerteil 50 eingebettet sein kann.

In der beschriebenen Ausführungsform können die Anspritzabschnitte bzw. Anschlagsabschnitte 20a, 20b des Lagerkerns 2 von einem zweiten Elastomerteil bzw. einer Elastomerkappe 80a, 80b umspritzt sein, insbesondere mit einem Elastomermaterial mit einer geringeren Elastizität im Vergleich zu der des Elastomerteils 50. In einer weiteren Ausführunsgform können die Elastomerteile 50, 60a, b aus dem gleichen Elastomermaterial hergestellt sein.

Ausweislich der Darstellung der Fig. 1 umfasst der Elastomerkörper 4 im Bereich seiner stirnseitigen Enden jeweils einen vom jeweiligen Ringabschnitt 41a, 41b des Fensterrohrs 40 radial nach innen zum Lagerkern 2 sich erstreckende und an diesem anhaftend gestaltete Blähfederabschnitte 68a, 68b, welche zwei noch näher zu beschreibende Flüssigkeitskammern in axialer Richtung abschließen, die in der beschriebenen Ausführungsform um einen Umfangswinkel von 90° versetzt zu den beiden Tragfederabschnitten 51a, 51b diametral gegenüberliegend angeordnet sein können.

Die Flüssigkeitskammern können radial außen durch zugeordnete Kanalhalbschalen 7a, 7b abgeschlossen sein, die sich mit ihren Außenmantelflächen 71a, 71b gegen die Innenmantelfläche 31 der Außenhülse 3 abstützen. Zur Bereitstellung eines Dämpfungskanals zwischen den beiden Flüssigkeitskammern weisen die umfänglich beabstandeten und jeweils einer der Flüssigkeitskammern zugeordneten Kanalhalbschalen 7a, 7b an ihrer der Außenhülse 3 zugewandten Außenmantelfläche 71a, 71b Ausnehmungen 70a, 70b auf, die im zusammengesetzten Zustand, insbesondere zusammengesetzt durch ein Aufschieben der Außenhülse 3 auf den mit dem Lagerkern verbundenen Elastomerkörper, radial abgeschlossen sind, so dass über den wie beschrieben gestalteten Dämpfungskanal Dämpfungsflüssigkeit je nach Betriebssituation von einer der beiden hier diametral gegenüberliegenden Flüssigkeitskammern zur anderen, oder umgekehrt, strömen kann.

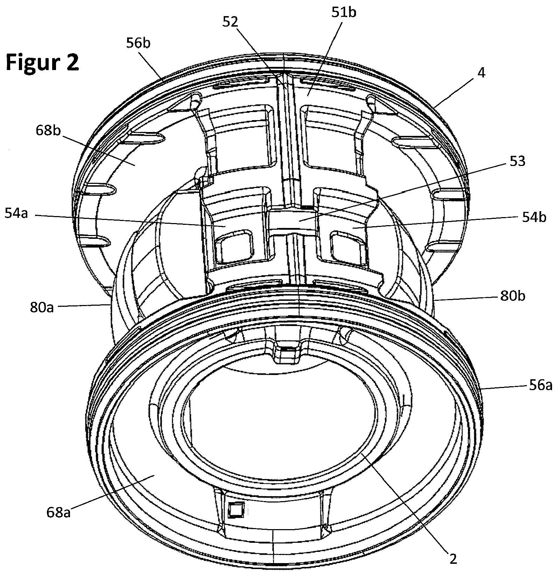

Figur 2 zeigt in einer perspektivischen Ansicht den Elastomerkörper 4 des erfindungsgemäßen Hydrolagers 1 mit daran anvulkanisiertem Lagerkern 2 in einer perspektivischen Ansicht in Längsrichtung mit Blick auf den elastomeren Dichtsteg 52, der in radialer Höhe mit elastomeren Dichtringen 56a, 56b korrespondiert und im aufgeschobenen Zustand der Außenhülse 3 an deren Innenmantelfläche 31 gepresst ist zur fluiddichten Abgrenzung der beiden hier diametral gegenüberliegenden Flüssigkeitskammern. Erkennbar sind auch die elastomeren Kappen 80a, 80b, die die radialen Anschlagselemente 20a, 20b des Innenteils bedecken und die jeweilige Fluidkammer nach radial innen begrenzen. In der beschriebenen Ausführungsform können die Elastomerkappen 80a, 80b aus einem härteren Elastomermaterial als die anderen Elastomerabschnitte des Elastomerkörpers 4 ausgebildet sein, insbesondere in Bezug auf die Tragfederabschnitte 51a, 51b und/oder die Blähfederabschnitte 68a, 68b.

Erkennbar ist der hier parallel zur Längsrichtung des Lagers verlaufende Dichtsteg 52 an einer Stelle seiner Längserstreckung unterbrochen. Dieser weist hier eine Kanalausnehmung 53 auf, die etwa tangential bzw. umfänglich und damit senkrecht zum Dichtsteg verlaufen kann. Diese Kanalausnehmung 53 stellt mit einem zugeordneten Innenmantelabschnitt der Außenhülse 3 einen in noch zu beschreibender Weise gestalteten Dämpfungskanalabschnitt als Teil des Dämpfungskanals zwischen den beiden hier diametral sich gegenüberliegenden Flüssigkeitskammern bereit.

Ausnehmungen 54a, 54b im Elastomer stellen Anlagenflächen für die Kanalhalbschalen 7a, 7b, siehe Figur 1, zur Anlage an den Elastomerkörper 4 im Bereich der Kanalausnehmung 53 bereit. Dabei weisen die Kanalhalbschalen in Einbaulage im Bereich dieser Kanalausnehmung 53 zugeordnete Ausnehmungen auf, um dort einen durchgängigen Dämpfungskanal bereitzustellen.

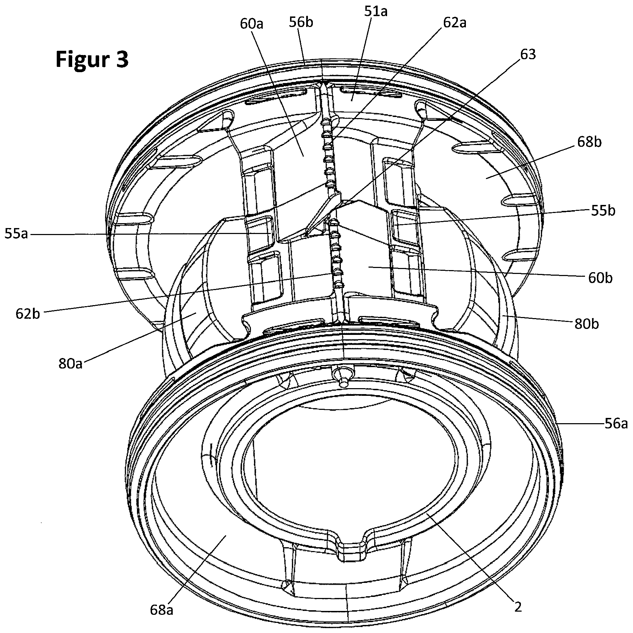

Figur 3 stellt den Elastomerkörper 4 mit daran anhaftendem Lagerkern 2 in einer ähnlichen Perspektive dar, wobei jedoch der Elastomerkörper mit anhaftendem Lagerkern im Vergleich zur Darstellung der Fig. 2 um 180° zu seiner Längsachse gedreht ist, so dass nun der andere, hier um etwa 180° versetzte Dichtabschnitt oder Dichtsteg sichtbar ist, der zusammen mit dem Dichtsteg 52 der Figur 2 die beiden Flüssigkeitskammern gegeneinander abgrenzt. Dieser parallel zur Längsrichtung des Lagers 1 verlaufende Dichtabschnitt kann wiederum im Bereich des Tragfederabschnitts 51a, 51b vorgesehen sein.

In der beschriebenen Ausführungsform kann zur Verbesserung des Frequenzverhaltens des erfindungsgemäßen Hydrolagers 1 und zur Vermeidung von Beschädigungen des Lagers 1 bei Betriebsanregungen mit erhöhten Amplituden eine Bypassvorrichtung vorgesehen sein umfassend eine Überdruckventileinrichtung, die insbesondere als Sicherheitsventileinrichtung ausgebildet sein kann. Dabei kann das Lager 1 im Tragfederabschnitt 51a zwei insbesondere parallel zur Längsrichtung und insbesondere zueinander fluchtend ausgerichtete Ventilklappen 60a, 60b aufweisen, die sich etwa in einem Winkel von 30° bis 60° in Ruhelage zur Radialrichtung erstrecken, wobei sie jeweils eine Ventilklappenbasis 61a, 61b aufweisen, die einen Teilabschnitt der Tragfeder darstellen kann.

Die jeweilige Ventilklappe kann an ihrem freien Ende eine Dichtlippe 62a, 62b aufweisen, die in Ruhelage an die Innenmantelfläche 31 der Außenhülse 3 gepresst ist zur Abgrenzung der beiden Flüssigkeitskammern zueinander. Insofern können in einer Schließstellung der jeweiligen Ventilklappe 60a, 60b diese mit ihrem Dichtlippenabschnitt 62a, 62b elastisch vorgespannt an der Innenflächenhülse anliegen, wobei zur Bereitstellung einer Offenstellung der jeweiligen Ventilklappe 60a, 60b diese radial nach innen elastisch auslenkbar angeordnet ist zum Abheben des jeweiligen Dichtlippenabschnitts 62a, 62b von der Außenhülse 3 und damit zum Herstellen einer Bypassfluidverbindung zwischen den beiden einander zugeordneten Flüssigkeitskammern.

Jede der Ventilklappen 60a, 60b kann mit einem lappenartigen Körperabschnitt über eine vorgegebene Längserstreckung verlaufen und sich radial und umfänglich erstrecken, insbesondere in einem Winkel von etwa 45° zur Tangentialrichtung. Dabei kann die jeweilige Ventilklappe 60a, 60b eine radial außenliegende, der Außenhülse 3 zugewandte Begrenzungsfläche aufweisen, welche eine der beiden Flüssigkeitskammern abschließt und eine radial innenliegende, der Außenhülse 3 abgewandte Begrenzungsfläche, welche die andere der beiden Kammern abschließt. In der Abbildung der Figur 3 sind aufgrund der perspektivischen Darstellung allein die jeweilige der Außenhülse 3 zugewandte Begrenzungsfläche der Ventilklappen 60a, 60b sichtbar.

Beide Ventilklappen 60a, 60b können in der dargestellten Ausführungsform durch eine Leckageausnehmung 63 gegeneinander abgegrenzt sein, die zum einen eine voneinander unabhängige Auslenkung der Ventilklappen 60a,60b ermöglicht und zum anderen einen im Betrieb permanent offenen Leckagekanal zwischen den beiden Kammern bereitstellt, der im Zusammenwirken mit einem zugeordneten Innenmantelflächenabschnitt der Außenhülse 3 und dieser Leckageausnehmung 63 im Tragfederabschnitt 51a gebildet ist.

Es hat sich herausgestellt, dass das Vorsehen eines solchen Leckagekanals, der im Unterschied zum eigentlichen Dämpfungskanal eine sehr viel geringere Kanallänge und einen geringeren Kanaldurchmesser aufweisen kann, die dynamische Steifigkeit des Lagers 1 bei hohen Anregungsfrequenzen wesentlich erniedrigen kann, wodurch die Standzeit eines solchen Lagers 1 stark erhöht werden kann. Diese positive Wirkung durch das Vorsehen eines Leckagekanals bei einem Hydrolager tritt insbesondere bei Hydrolagern auf, die eine Bypassvorrichtung mit einer Überdruckventileinrichtung aufweisen. Eine positive Wirkung durch den Leckagekanal kann jedoch auch bei erfindungsgemäßen Hydrolagern auftreten, die keine Bypassvorrichtung aufweisen.

Es hat sich herausgestellt, dass durch einen Leckagenfluidfluss von einer Kammer in die andere Kammer, beispielsweise hervorgerufen durch eine Druckerhöhung in der einen Kammer aufgrund einer Beanspruchung, das Öffnen eines Ventilelements bzw. einer Ventilklappe 60a, 60b unterstützt bzw. gesteuert werden kann, insbesondere dadurch, dass sich durch den Leckagenfluidfluss die Druckverhältnisse im Bereich der Ventilelemente ändern.

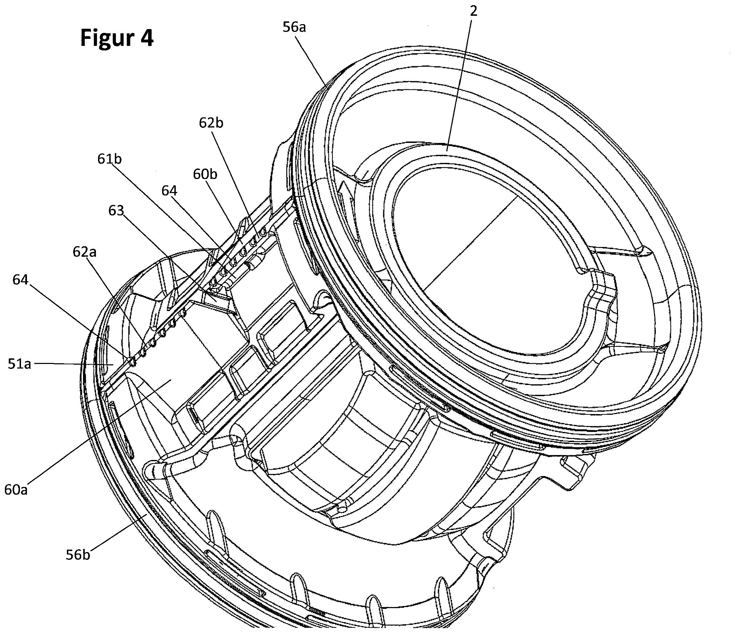

Figur 4 zeigt den mit Bezug auf Figur 3 beschriebenen Tragfederabschnitt 51a mit den beiden Ventilklappen 60a, 60b in einer anderen perspektivischen Detailansicht aus welcher der Aufbau der Ventilklappen 60a, 60b genauer hervorgeht. Erkennbar sind beide Ventilklappen 60a, 60b gegenläufig ausgebildet, d. h. sie lösen beim Öffnen einen Fluidfluss in unterschiedliche Richtungen zwischen den Kammern aus. Die in der Figur rechte Ventilklappe 60b erstreckt sich von ihrer Klappenbasis 61b der Tragfeder 51a mit ihrer Dichtlippe 62b auf den Betrachter zu und öffnet insofern bei einer erhöhten Druckbeaufschlagung in der vom Betrachter hinteren Kammer durch elastische Verformung und Ablösen der Dichtlippe 62b von der Außenhülse 3 nach radial innen. Demgegenüber öffnet die in Figur 4 linke Ventilklappe 60a bei einem erhöhten Druck auf die der Außenhülse 3 zugewandte und in der Figur sichtbare Klappenfläche, so dass beim Öffnen dieser Klappe ein Fluidfluss von der in der Figur vorderen Fluidkammer in die hintere Kammer ermöglicht wird.

Beide Ventilklappen 60a, 60b werden durch die hier in einem Winkel von etwa 45° zur Längsrichtung des Lagers bzw. zur Erstreckung der Dichtlippen 62a, 62b verlaufende Leckageausnehmung 63 getrennt, die wie beschrieben einen permanenten Leckagefluss zwischen den Kammern ermöglicht und überraschend die dynamische Steifigkeit des erfindungsgemäßen Lagers bei hohen Frequenzen erniedrigt. Im Zusammenspiel mit der Verwendung einer Bypassvorrichtung, insbesondere mit der beschriebenen Bypassvorrichtung kann diese Erniedrigung des maximalen Verlustwinkels im Bereich zwischen 10% bis 30% liegen. In anderen Ausführungsformen kann der Leckagekanal auch so ausgebildet sein, dass dieser einen anderen Winkel zur Längsachse aufweist, insbesondere senkrecht zur Längsachse.

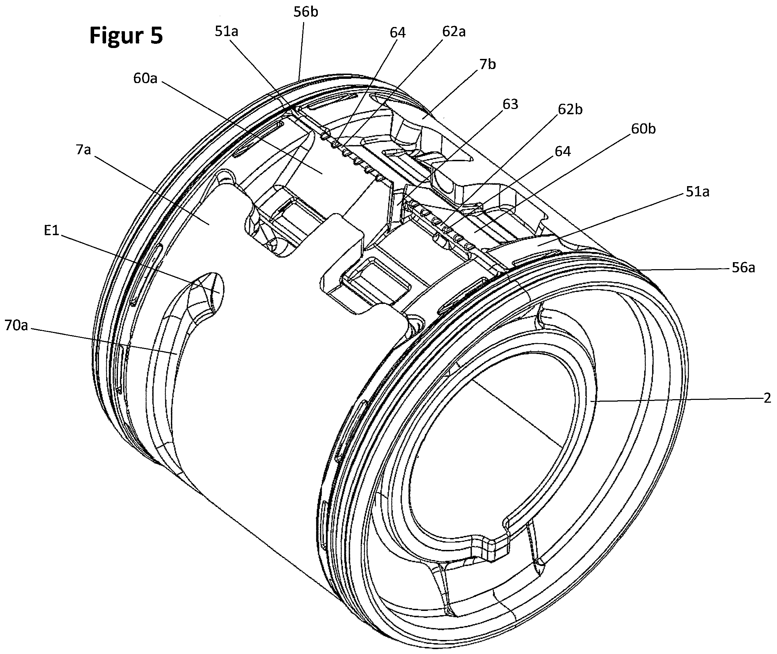

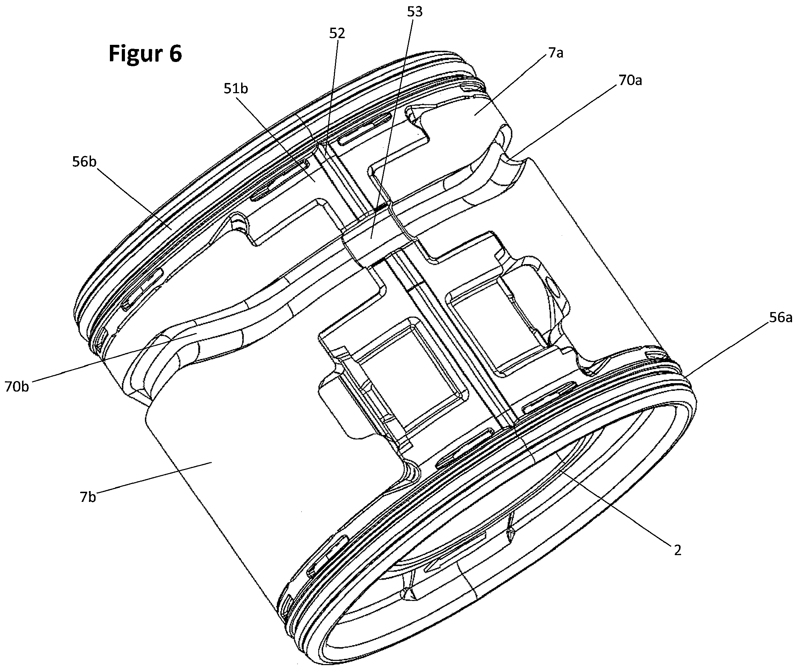

Die Figuren 5 und 6 zeigen die Zusammensetzung des erfindungsgemäßen Hydrolagers 1 in einem Stadium, bei welchem die beiden Kanalhalbschalen 7a, 7b auf den mit dem Lagerkern 2 verbundenen Elastomerkörper 4 aufgesetzt sind. Dabei zeigt Figur 5 eine perspektivische Ansicht mit Blick auf den Tragfederabschnitt 51a mit dort ausgebildeter Bypassvorrichtung und Figur 6 eine perspektivische Ansicht mit Blick auf den Tragfederabschnitt 51b mit dem durch die Kanalausnehmung 53 unterbrochenen Dichtsteg 52. Wie aus beiden Figuren hervorgeht, sind die hier in radialer Richtung diametral gegenüberliegend angeordneten Flüssigkeitskammern mittels eines Dämpfungskanals permanent Fluid-verbunden, wobei Dämpfungskanalabschnitte 70a, 70b der beiden Kanalhalbschalen 7a, 7b zur elastomeren Kanalausnehmung 53 ausgerichtet sind, um zusammen mit zugeordneten Innenmantelflächenabschnitten der Außenhülse 3 diesen Dämpfungskanal zu bilden.

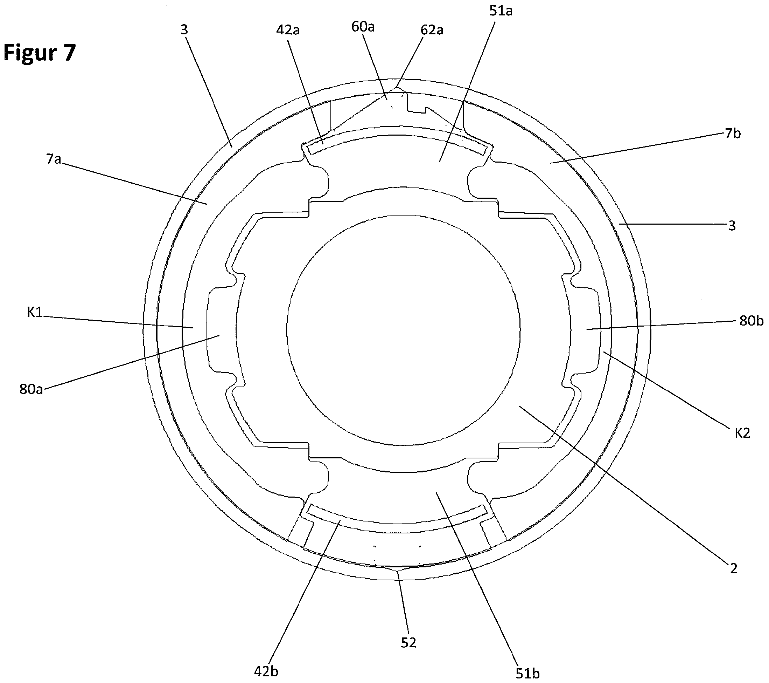

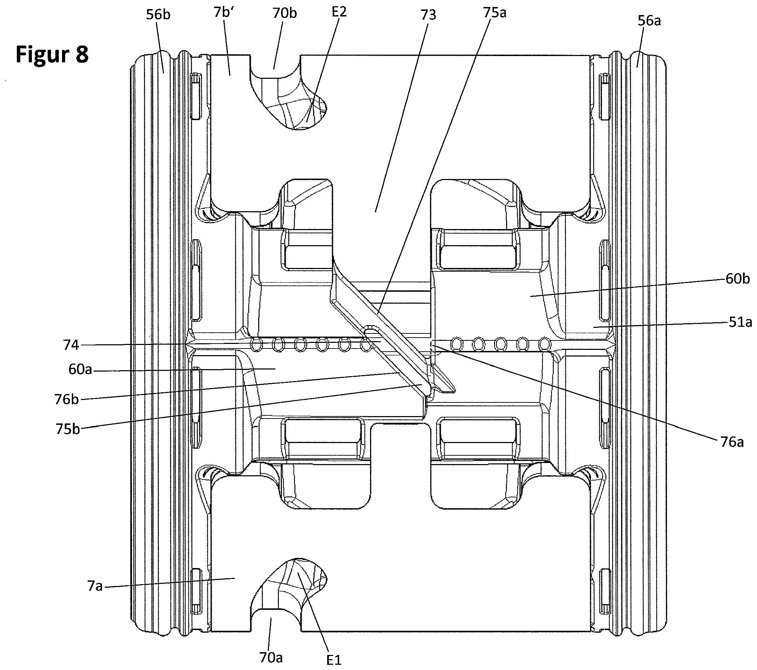

Figur 7 zeigt das beschriebene erfindungsgemäße Hydrolager 1 in einem Schnitt senkrecht zur Längsachse. Erkennbar sind die beiden Tragfederabschnitte 51a, 51b, wobei der Tragfederabschnitt 51b an seinem radialen Endabschnitt den Dichtsteg 52 aufweist zur Abdichtung der beiden Fluidkammern K1, K2 zueinander durch Anlage des Dichtsteges 52 an der Außenhülse 3. Dagegen weist der Tragfederabschnitt 51a an seinem radialen Endabschnitt die Ventilklappen 60a, 60b mit eingeformter Leckageausnehmung 63 auf bzw. trägt diese, siehe Fig. 5. In der Ansicht der Fig. 7 sind die beiden zur Bereitstellung des die Kammern K1, K2 verbindenden Dämpfungskanals ineinander übergehenden Fluidkanäle verdeckt. Wie erläutert werden die Fluidkanäle durch die beiden Kanalausnehmungen 70 a, 70 b der Kanalhalbschalen 7a, 7B und die Innenmantelfläche der Außenhülse 3 gebildet. Der Dämpfungskanal kann im Wesentlichen senkrecht zur Längsachse des Lagers 1 bzw. auf vorgegebener Längshöhe verlaufen und eine Umfangserstreckung im Bereich von etwa 240° bis 300°, insbesondere etwa 270° aufweisen. Ausgehend von den Ausnehmungen 70a, 70b erstreckt sich jeweils in beiden Kanalhalbschalen 7a, 7b an einem Längsende der Kanalausnehmung eine radiale Durchführung E1, E2 zur Bereitstellung der angegebenen Fluidverbindung zwischen den Kammern K1, K2 mittels des Dämpfungskanals, siehe auch die nachfolgende Fig. 8.

In den obenstehend mit Bezug auf die Figuren 1 bis 7 beschriebenen Ausführungsformen des erfindungsgemäßen Hydrolagers 1 ist der Leckagekanal durch eine Ausnehmung bzw. ein Freiraum zwischen den beiden Ventilklappen 60a, 60b im Elastomermaterial des Tragfederabschnitts 51a ausgebildet. In dieser Ausführungsform können die Leckagekanalausnehmung sowie die beiden hierzu benachbarten und daran angrenzenden Ventilklappen 60a, 60b integral mit bzw. als Teil des Tragfederabschnitts 51a hergestellt sein.

Um im Wesentlichen unabhängig von den Betriebszuständen des Lagers 1 einen Leckagekanal mit vorgegebener Länge und vorgegebenem Durchmesser bereitzustellen kann vorgesehen sein, diesen Kanal zumindest abschnittsweise an einem verlängerten Abschnitt einer Kanalschale bzw. einer Kanalhalbschale auszubilden, siehe Figur 8. Diese Darstellung entspricht der Darstellung der erstbeschriebenen Ausführungsform gemäß Figur 5 mit Ausnahme des Umstandes, dass Figur 8 keine Perspektivansicht, sondern eine frontale Seitenansicht auf die Ventilklappen 60a, 60b zeigt. In dieser Ausführungsform kann ein umfänglicher Fortsatz 73 der Kanalhalbschale 7b' eine insbesondere schräg zur Längsachse des Lagers verlaufende Leckagekanalausnehmung 74 aufweisen, die in der Art einer Nut in der Kanalschale 7b in einem Endabschnitt des Fortsatzes 73 ausgebildet sein kann. Innenflächen der Wandabschnitte 75a, 75b des Fortsatzes 73 können die Nut seitlich beschränken. Außenflächen der Wandabschnitte 75a, 75b stellen Führungsflächen 76a, 76b für die Ventilklappen 60a, 60b bei deren Auslenkung bzw. Rückstellung zwischen einer Schließstellung und einer Offenstellung bereit. Mit der in Figur 8 angegebenen Ausführungsform ist eine nochmalige Verbesserung der Standzeit des Lagers 1 erzielbar.

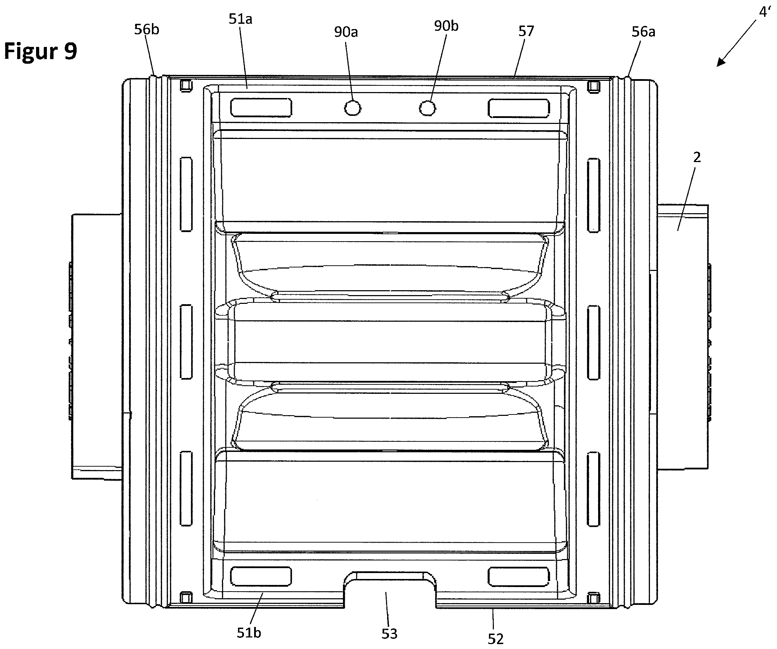

Es hat sich gezeigt, dass das Vorsehen eines Leckagekanals im Bereich eines Federabschnittes, insbesondere eines Tragfederabschnittes des Elastomerkörpers innerhalb eines Hydrolagers 1 auch zu einer Erniedrigung des Verlustwinkels bei hohen Frequenzen führen kann, wenn keine Bypassvorrichtung und damit keine Überdruckventileinrichtung zwischen den einander zugeordneten Fluidkammern vorgesehen ist. Eine solche Ausführungsform ist beispielhaft in Figur 9 angegeben. Die Figur zeigt für diese weitere Ausführungsform einen Elastomerkörper 4' mit anvulkanisiertem Lagerkern 2 mit entfernter Außenhülse, wobei in dieser Ausführungsform das Lager 1 wie die bislang erörterten Lager 1 als Radiallager ausgelegt ist, bei welchem die einander zugeordneten Flüssigkeitskammern diametral gegenüberliegend angeordnet sind mit sich längserstreckenden Tragfederabschnitten 51a, 51b, die zu den einander zugeordneten beiden Flüssigkeitskammern um 90° versetzt angeordnet sein können. Der eine Tragfederabschnitt 51b weist wiederum eine Kanalausnehmung 53 zur Verbindung der Kanalabschnitte der Kanalhalbschalen 7a, 7b auf, wobei jedoch der diametral gegenüberliegende Tragfederabschnitt 51a keine Bypassvorrichtung umfasst, sondern einen sich in Längsrichtung ununterbrochen erstreckenden Dichtsteg 57, der wie der gegenüberliegende Dichtsteg 52 in Einbaulage elastisch vorgespannt gegen die Innenmantelfläche 31 der Außenhülse 3 gepresst ist zur gegenseitigen Abgrenzung der beiden Fluidkammern. Die Ausführungsform der Figur 9 weist im Bereich des zweiten Tragfederabschnitts 51a zwei Durchführungen oder Löcher 90a, 90b auf, welche den Tragfederabschnitt 51a umfänglich vollständig durchqueren, so dass über die Durchführungen 90a, 90b die beiden Flüssigkeitskammern Fluid-verbunden sind.

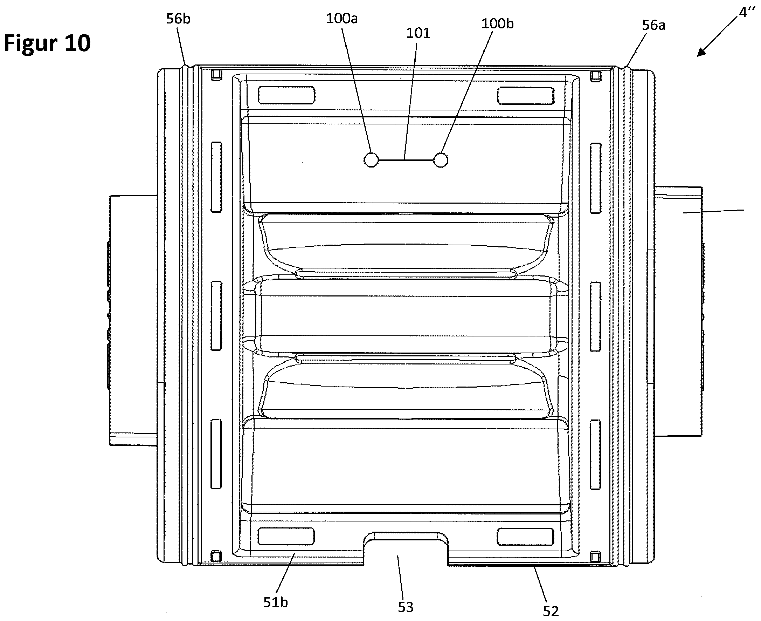

Figur 10 zeigt eine weitere Ausführungsform eines erfindungsgemäß gestalteten Hydrolagers 1, wobei die Durchführungen 100a, 100b durch den Tragfederabschnitt in ähnlicher Weise wie in der Ausführungsform der Figur 9 beabstandet sind zur Bereitstellung einer Leckage-Fluidverbindung zwischen den beiden Fluidkammern, wobei die Durchführungen 100a, 100b durch einen hier in Längsrichtung verlaufenden Schlitz verbunden sind. Die Ausführung ist derart, dass in Betriebssituationen mit geringer oder keiner äußeren Belastung auf das Lager 1 eine spaltfreie Verbindung der an den Schlitz angrenzenden Elastomerabschnitten vorliegt, so dass in dieser Betriebssituation allein durch die Durchführung 100a, 100b ein Leckagefluidfluss zwischen den Kammern erfolgen kann. Erst bei vorgegebenen Belastungen des Lagers 1 bzw. Druckunterschieden in beiden Kammern können die den Schlitz in der beschriebenen Ruheposition aneinander liegenden Elastomerabschnitte elastisch ausgelenkt werden, wodurch der Schlitz aufspaltet zur Bereitstellung eines Bypassfluidflusses zwischen den Kammern aufgrund der angegebenen erhöhten Belastung des Lagers 1. Diese Ausführungsform ist herstellungstechnisch einfach erzeugbar und somit attraktiv bei Lagern, die im Betrieb einer beschränkten Belastung ausgesetzt sind.

### Bezugszeichenliste

- 1: Hydrolager
- 2: Lagerkern
- 3: Außenhülse
- 4, 4', 4": Elastomerkörper
- 7a, 7b, 7b': Kanalhalbschale
- 20a, 20b: Anspritzung, Anschlagselement
- 30: Außenmantelfläche
- 31: Innenmantelfläche
- 32: Umbördelung
- 40: Fensterrohr
- 41a, 41b: Ringabschnitt
- 42a, 42b: Längsabschnitt
- 50: Elastomerteil
- 51a, 51b: Tragfederabschnitt
- 52: Dichtsteg
- 53: Kanalausnehmung
- 54a, 54b: Schalenausnehmung
- 55a, 55b: Schalenauflage
- 56a, 56b: Dichtring
- 57: Dichtsteg
- 60a, 60b: Ventilklappe
- 61a, 61b: Ventilklappenbasis, Basisabschnitt
- 62a, 62b: Dichtlippe, Dichtlippenabschnitt
- 63: Leckageausnehmung
- 64: Aufnahme, Aufnahmetasche
- 68a, b: Blähfederabschnitt, Blähmembranabschnitt
- 70a, 70b: Ausnehmung
- 71a, 71b: Außenmantelfläche
- 72a, 72b: Innenmantelfläche
- 73: Schalenfortsatz, Schalenfinger
- 74: Leckagekanalausnehmung, Nut
- 75a, 75b: Wandung
- 76a, 76b: Führungsfläche
- 80a, 80b: elastomere Kappe, Elastomerkappe
- 90a, 90b: Durchführung
- 100a, 100b: Durchführung
- 101: Schlitz
- E1, E2: Durchführung
- K1, K2: Fluidkammer, Kammer

## Patentansprüche

1. Hydraulisch dämpfendes Lager (1), mit einem Lagerkern (2), einer Außenhülse (3), und einem zwischen Lagerkern (2) und Außenhülse (3) angeordneten Elastomerkörper (4, 4', 4"), wobei Lagerkern (2), Außenhülse (3) und Elastomerkörper (4, 4', 4") zumindest zwei mit Dämpfungsflüssigkeit gefüllte, einander zugeordnete Flüssigkeitskammern (K1, K2) begrenzen, und wobei die einander zugeordneten Flüssigkeitskammern durch zumindest einen Dämpfungskanal Fluid-verbunden sind, **dadurch gekennzeichnet, dass** das Lager (1) einen Leckagekanal aufweist, der die Kammern (K1, K2) Fluid-verbindet zur Bereitstellung eines Leckagenfluidflusses zwischen den Flüssigkeitskammern, wobei eine Länge des Leckagekanals kleiner als 1/3, insbesondere kleiner als 1/5 einer Länge des Dämpfungskanals ist.

2. Hydraulisch dämpfendes Lager (1) nach Anspruch 1, **dadurch gekennzeichnet, dass** das Lager eine Bypassvorrichtung umfasst mit einer Überdruckventileinrichtung zum Herstellen einer Bypassfluidverbindung zwischen den Kammern durch Öffnen der Überdruckventileinrichtung, wobei beim Überschreiten eines vorgegebenen Flüssigkeitsinnendrucks in einer der einander zugeordneten Kammern der Leckagenfluidfluss durch den Leckagekanal von der einen Kammer in die andere Kammer zur Unterstützung und/oder Steuerung des Öffnens der Überdruckventileinrichtung bereitgestellt ist.

3. Hydraulisch dämpfendes Lager (1) nach Anspruch 1 oder 2, **dadurch gekennzeichnet, dass** das Verhältnis des Durchmessers Leckagekanals und des Durchmessers des Dämpfungskanals kleiner als ½, insbesondere kleiner als 1/3 ist.

4. Hydraulisch dämpfendes Lager (1) nach einem der Ansprüche 2 bis 3, **dadurch gekennzeichnet, dass** durch den Leckagenfluidfluss hinein in die andere der einander zugeordneten Kammern (K1, K2) an der Überdruckventileinrichtung eine Druckerniedrigung erzeugbar ist zur Unterstützung des Öffnens der Bypassfluidverbindung zwischen den Kammern.

5. Hydraulisch dämpfendes Lager (1) nach einem der Ansprüche 2 bis 4, **dadurch gekennzeichnet, dass** die Überdruckventileinrichtung der Bypassvorrichtung zumindest zwei zum Öffnen elastische verformbare Ventilelemente umfasst, wobei eine der beiden Ventilelemente einer ersten hydraulischen Arbeitsrichtung des Lagers (1) und die andere der beiden Ventilelemente einer zweiten Arbeitsrichtung des Lagers (1) zugeordnet ist.

6. Hydraulisch dämpfendes Lager (1) nach Anspruch 5, **dadurch gekennzeichnet, dass** zumindest eines der Ventilelemente eine elastisch auslenkbare Ventilklappe (60a, 60b) umfasst, mit einer an dem Elastomerkörper (4, 4', 4") angeformten Basisabschnitt (61a, 61b) und einem zumindest abschnittsweise freitragenden Dichtlippenabschnitt (62a, 62b), der in einer Schließstellung der Ventilklappe (60a, 60b) elastisch vorgespannt an einer Innenfläche der Außenhülse (3) anliegt, wobei zur Bereitstellung einer Offenstellung der Ventilklappe (60a, 60b) diese radial nach innen elastisch ausgelenkbar ist zum Abheben des Dichtlippenabschnitt von der Innenfläche der Außenhülse (3) und zum Herstellen einer Bypassfluidverbindung zwischen den beiden einander zugeordneten Flüssigkeitskammern (K1, K2), wobei vorzugsweise der freitragende Dichtlippenabschnitt (62a, 62b) in seiner Längserstreckungsrichtung eine Mehrzahl voneinander beabstandeten Aufnahmetaschen (64) aufweist.

7. Hydraulisch dämpfendes Lager (1) nach einem der Ansprüche 5 oder 6, **dadurch gekennzeichnet, dass** die zumindest zwei zum Öffnen elastisch verformbaren Ventilelemente benachbart zueinander ausgebildet sind, wobei der Leckagekanal zwischen beiden Ventilelementen angeordnet ist und an beiden angrenzt.

8. Hydraulisch dämpfendes Lager (1) nach einem der Ansprüche 1 bis 7, **dadurch gekennzeichnet, dass** der Leckagekanal durch dessen Ausrichtung ausgebildet und angeordnet ist, einen Leckagenfluidfluss in einem Winkel von etwa 45 Grad relativ zu einer Parallelen einer Längsachse des Lagers (1) bereitzustellen.

9. Hydraulisch dämpfendes Lager (1) nach einem der Ansprüche 6 bis 8, **dadurch gekennzeichnet, dass** der Basisabschnitt zumindest einer der Ventilklappen 60a, 60b) an einem Elastomerabschnitte des Elastomerkörpers (4, 4', 4") angeordnet ist.

10. Hydraulisch dämpfendes Lager (1) nach einem der Ansprüche 1 bis 9, **dadurch gekennzeichnet, dass** der Leckagekanal eine radiale Ausnehmung an einem Federkörperabschnitt des Elastomerkörpers (4, 4', 4") umfasst, die radial außen durch eine Innenmantelfläche (31) der Außenhülse (3) abgeschlossen ist.

11. Hydraulisch dämpfendes Lager (1) nach einem der Ansprüche 1 bis 10, **dadurch gekennzeichnet, dass** der Elastomerkörper (4, 4', 4") ein Fensterrohr (40) umfasst, an welchem radial diametral gegenüberliegende und am Lagerkern (2) anhaftende, elastomere Federkörperabschnitte angeordnet sind, welche längsstirnseitig durch sich umfänglich erstreckende und sich zwischen dem Lagerkern (2) und axial beabstandeten Ringabschnitten des Fensterrohrs (40) erstreckende elastomere Blähfederabschnitte verbunden sind zur Abgrenzung der beiden einander zugeordneten Flüssigkeitskammern, die radial gegenüberliegend angeordnet und radial durch die Außenhülse (3) abgeschlossen sind.

12. Hydraulisch dämpfendes Lager (1) nach einem der Ansprüche 1 bis 11, **dadurch gekennzeichnet, dass** eine ein- oder mehrteilige, insbesondere eine zweiteilige Kanalschale zwischen der Außenhülse (3) und dem Elastomerkörper (4, 4', 4") angeordnet ist zur Bereitstellung des zumindest einen Dämpfungskanals zwischen den beiden einander zugeordneten Flüssigkeitskammern (K1, K2), wobei die Kanalschale (7a, 7b) an einer der Außenhülse (3) zugewandten Außenseite eine umfänglich und/oder axial verlaufende Kanalausnehmung (70a, 70b) aufweist, die radial durch die Außenhülse (3) abgeschlossen ist zur Bereitstellung des Dämpfungskanals, wobei vorzugsweise
der Lagerkern (2) an seinen die beiden Flüssigkeitskammern (K1, K2) einschließenden Umfangsabschnitten jeweils einen radial nach außen sich erstreckenden Anschlagspuffer aufweist, der mit einer zugeordneten Innenmantelfläche (32) der Kanalschale (7a, 7b) zur Beschränkung der relativen radialen Bewegung des Lagerkerns (2) zur Außenhülse (3) zusammenwirkt.

13. Hydraulisch dämpfendes Lager (1) nach Anspruch 12, **dadurch gekennzeichnet, dass** der Leckagekanal in einer Kanalschale angeordnet ist.

14. Hydraulisch dämpfendes Lager (1) nach einem der Ansprüche 1 bis 13, **dadurch gekennzeichnet, dass** der Leckagekanal als Durchführung (90a, 90b) in einem Elastomerwandabschnitt des Elastomerkörpers (4, 4', 4") ausgebildet ist, welcher die beiden Flüssigkeitskammern gegeneinander abgrenzt.

15. Hydraulisch dämpfendes Lager (1) nach Anspruch 14, **dadurch gekennzeichnet, dass** die Überdruckventileinrichtung der Bypassvorrichtung in einer Schließstellung einen in einer Längsrichtung ausgebildeten und zwei Längsenden umfassenden spaltfreien Trennschlitz aufweist, der sich in Dickenrichtung eines Elastomerwandabschnitts des Elastomerkörpers (4, 4', 4") erstreckt, wobei an einem Längsende des Trennschlitzes dieser in den Leckagekanal übergeht.
